# EUROPÄISCHE PATENTSCHRIFT

(11) **EP 2 158 388 B1**
(45) Veröffentlichungstag und Bekanntmachung des Hinweises auf die Patenterteilung: **11.09.2019**
(21) Anmeldenummer: 08774052.8
(22) Anmeldetag: 06.06.2008
(51) Int. Cl.: F02C 3/34, F02C 6/18

(54) **GASTURBINENANLAGE MIT ABGASREZIRKULATION**
GAS TURBINE SYSTEM HAVING EXHAUST GAS RECIRCULATION
INSTALLATION DE TURBINE À GAZ AVEC RECIRCULATION DES GAZ D'ÉCHAPPEMENT

(30) Priorität: 19.06.2007 CH 982072007
(43) Veröffentlichungstag der Anmeldung: 03.03.2010
(73) Patentinhaber: Ansaldo Energia IP UK Limited, London W1G 9DQ (GB)
(72) Erfinder: BRAUTSCH, Andreas, 5303 Würenlingen (CH); WINKLER, Dieter, 79787 Lauchringen (DE); CARRONI, Richard, 5443 Niederrohrdorf (CH)
(74) Vertreter: Bernotti, Andrea
(86) Internationale Anmeldenummer: PCT/EP2008/057062
(87) Internationale Veröffentlichungsnummer: WO 2008/155242

(56) Entgegenhaltungen:
- EP-A- 1 854 761
- WO-A-03/029618
- WO-A-2005/064232
- WO-A-2006/100176
- DE-A1- 19 810 820
- DE-A1-102005 015 151
- JP-A- 2004 052 631
- US-A- 5 271 215
- US-A- 5 595 059
- US-A1- 2007 044 481

## Beschreibung

### Technisches Gebiet

Die Erfindung betrifft ein Verfahren zum Betrieb einer Gasturbinenanlage mit wasserstoffreichem Brenngas, welches bezüglich Flammrückschlag durch Reduktion des Sauerstoffgehaltes der Verbrennungsluft durch Abgasrezirkulation robust ist sowie eine Gasturbineanlage mit Vorrichtung zur Ausführung des Verfahrens.

### Stand der Technik

Die Forschung und Entwicklung der Verbrennung von Wasserstoff oder wasserstoffreichen Brennstoffen in Gasturbinen wird im wesentlichen von zwei Faktoren vorangetrieben.

Zum einen besteht ein weltweites Interesse, den Ausstoss von Treibhausgasen, insbesondere an CO₂ zu reduzieren. Eine Möglichkeit hierfür ist die Umstellung von konventionellen fossilen Brennstoffen auf eine wasserstoffbasierte Energieversorgung. Dabei kann diese zunächst noch auf konventionellen fossilen Rohstoffen mit Wasserstoffsynthese und CO₂ Bindung basieren.

Zum anderen führen die limitierten Erdgasreserven zu Überlegungen synthetisch aufbereitete, gasförmige Brennstoffe alternativ zu oder in Kombination mit der Verbrennung herkömmlicher Brennstoffarten einzusetzen. Diese synthetisch aufbereiteten, gasförmigen Brennstoffe, wie sie zum Beispiel in IGCC (Integrated Gasification Combined Cycle) vorkommen, enthalten häufig hohe Wasserstoffkonzentrationen.

Die Verbrennung von Wasserstoff in konventionellen Verbrennungssystemen von Gasturbinen führen aufgrund der hohen Flammgeschwindigkeit und kleinen Zündverzugszeit des Wasserstoffs bekanntermassen zu technischen Problemen, wie Flammrückschlag und erhöhten NOx Emissionen.

Als Gegenmassnahmen sind neben der einfachen Herabsetzung der Betriebswerte, die Möglichkeit den wasserstoffreichen Brennstoff mit N₂ oder anderen Inertgasen zu verdünnen und insbesondere verschiedene Konzepte zur Verdünnung der Verbrennungsluft oder des Brenngases mit Dampf bekannt. Dabei wird Dampf eingespritzt oder Wasser zur Verdampfung im Luftkanal oder in dem Brennstoffsystem eingespritzt.

Zur Reduktion der NOx Emissionen sind in der Literatur weiter verschiedene Möglichkeiten der "Mild Combustion" oder "Flameless Combustion" bekannt. Dabei wird durch Rezirkulation eines Teiles der Abgase die Sauerstoffkonzentration der Verbrennungsluft reduziert. In der DE10297365 wird hierzu vorgeschlagen einen Teil der Verbrennungsluft noch vor der Expansion in der Turbine um die Brennkammer zu rezirkulieren und mit der Verdichteraustrittsluft zu vermischen.

In der DE19810820 wird das Problem der erhöhten NOx Emissionen bei Verbrennung von stickstoffhaltigen Brennstoffen, wie sie beispielsweise bei der Verbrennung von ammoniakhaltigen Brenngasen auftreten, behandelt. Dort wird zur Reduktion dieser sogenannten "Brennstoff- NOx" vorgeschlagen, die Abgase nach Austritt aus der Turbine weiter zu kühlen und im Einlass des Verdichters zuzumischen oder in einem separaten Abgaskompressor zu verdichten und am Einlass der Brennkammer zu zumischen, um bei einem Sauerstoffgehalt von vorzugsweise 14% bis 16% ein Minimum der NOx Emissionen zu finden.

Abgasrezirkulation ist weiter bekannt, um die Konzentration von CO2 im Abgas zu erhöhen und gleichzeitig die abzuführende Abgasmenge zu reduzieren und damit den Aufwand für einen CO2 Entzug aus den Abgasen zu reduzieren (P. Chiesa, S. Consonni: Natural Gas Fired Combined Cycles with Low CO2 Emissions, Journal of Engineering for Gas Turbines and Power, Vol. 122, ASME, July 2000, p.429 - 436).

Eine besondere Form der Abgasrezirkulation ist eine Rezirkulation eines Teils des Abgases in und Vermischung mit dem Brenngas. Diese Form der Abgasrezirkulation in das Brenngas ist aus der US 5 595 059 bekannt. Dort wird das Abgas mit einem Abgaskompressor, nach Austritt aus einer der Gasturbinenanlage nachgeschalteten Vorrichtung zur Ausnutzung der Abwärme, komprimiert. Das komprimierte Abgas wird mit Brenngas vermischt und einem Reformer zugeführt, bevor das reformierte Gas in die Brennkammer eingebracht wird.

WO2005064232 beschreibt eine Wärmekraftanlage mit sequentieller Verbrennung und reduziertem CO2-Ausstoß, die folgende über jeweils wenigstens einen Strömungskanal in Serie miteinander verbundene Komponenten aufweist: eine Verbrennungszuluft-Kompressoreinheit, eine erste Brennkammer, eine Hochdruckturbinenstufe, eine zweite Brennkammer sowie eine Niederdruckturbinenstufe. Die zweite Brennkammer und/oder die Niederdruckturbinenstufe zu Kühlzwecken sind mit einem Kühlgasstrom versorgbar. Ferner umfasst die Anlage eine Rezirkulationsleitung, die wenigstens einen Teil eines aus der Niederdruckturbinenstufe austretenden Abgasstroms einer Verdichtereinheit zuführt, eine Kühlleitung, die wenigstens einen Teil des aus der Verdichtereinheit austretenden komprimierten Abgasstroms als Kühlgasstrom der zweiten Brennkammer und/oder der Niederdruckturbinenstufe zu Kühlzwecken zuführt, und eine CO₂-Abscheideeinheit, die in der Kühlleitung vorgesehen ist, und die zumindest Anteile von CO₂ aus dem Kühlgasstrom separiert.

### Darstellung der Erfindung

Der vorliegenden Erfindung ist die Aufgabe gestellt, eine sichere, insbesondere in bezug auf Flammrückschlag robuste Verbrennung mit niedrigen CO und NOx Emissionen von wasserstoffreichen Brenngasen in Gasturbinen zu realisieren. Dies ist insbesondere bei wasserstoffreichen Brenngasen mit kurzer Zündverzögerung und hohen Flammgeschwindigkeiten, die eine gute, für niedrige Emissionen unabdingbare Vormischung von Luft- und Brenngas erschweren, problematisch. Im Rahmen dieser Problemstellung werden Brenngase mit etwa 30% bis 100% Wasserstoffanteil als wasserstoffreiche Brenngase betrachtet. Dies können beispielsweise Syngase oder reiner Wasserstoff sein.

Zur Lösung dieser Aufgabe wird erfindungsgemäss ein Verfahren zum Betrieb einer Gasturbinenanlage mit wasserstoffreichem Brenngas zur Reduktion des Sauerstoffgehaltes in der Verbrennungsluft der Gasturbinenanlage durch Rezirkulation von Abgas nach Anspruch 1 vorgeschlagen.

Ebenfalls wird zur Lösung der Aufgabe erfindungsgemäss eine Gasturbine nach Anspruch 8 zur Durchführung des Verfahrens vorgeschlagen. Bevorzugte Ausführungsformen der Erfindung werden in den abhängigen Ansprüchen aufgeführt.

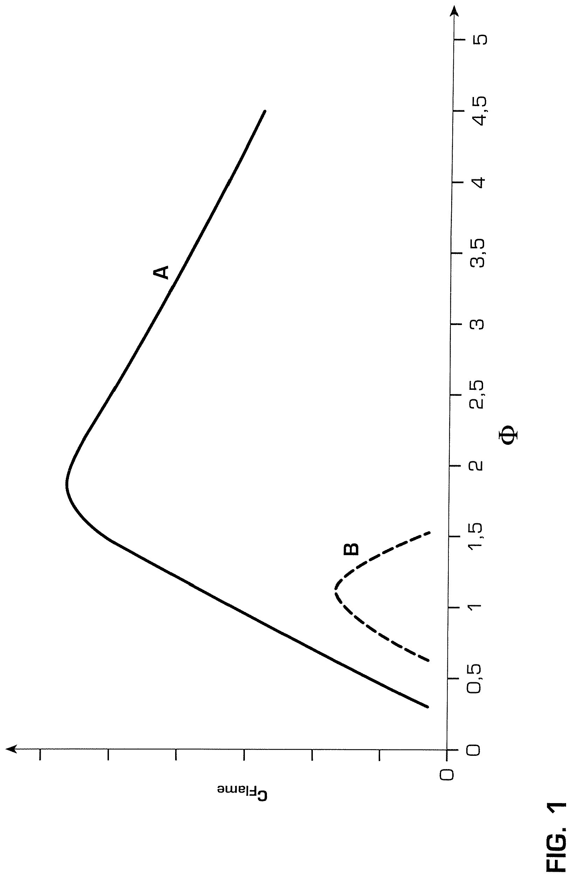

Die grundlegende Problematik der Wasserstoffverbrennung kann anhand von Figur 1, die die Flammgeschwindigkeit von Wasserstoff in Luft (A) und Methan in Luft (B) unter atmosphärischen Bedingungen in Abhängigkeit des stöchiometrischen Verhältnisses c zeigt, erläutert werden. Im Gegensatz zu Erdgasen (Brennstoffen mit in der Regel über 90% Methananteil), die ihre höchste Flammgeschwindigkeit bei praktisch stöchiometrischer Verbrennung (Φ =1, der gesamte Luftsauerstoff wird bei der Reaktion mit dem Benngases verbraucht) erreichen, und bei fettem Gemisch schnell eine deutliche Reduktion der Flammgeschwindigkeit zeigen, erreicht die Wasserstoffflame bei fetten Gemischen mit Φ von knapp 2 ihr Maximum. Der brennbare Bereich und eine hohe Flammgeschwindigkeit erstreckt sich bis zu sehr fetten Gemischen. Diese hohe Flammgeschwindigkeit bei fettem Gemisch führt ohne geeignete Gegenmassnahmen in einer Gasturbine zu einer Entzündung und Flammrückschlag der Luft-Brennstoffgemische unmittelbar nach Einspritzung des wasserstoffreichen Brennstoffes. Die Zündung findet statt, bevor es zu einer deutlichen Reduktion des Brennstoffgehaltes durch Vermischung mit Verdichteraustrittsluft kommen kann. Die Flamme schlägt dabei unkontrolliert in die Brenner zurück und es kommt durch die lokal hohen Brennstoffkonzentrationen zu sehr hohen Temperaturspitzen mit entsprechend hohen NOx Emissionen. Infolge des Flammrückschlages kann ausserdem die Brennerhardware innerhalb kurzer Zeit beschädigt werden.

Zur Reduktion des Sauerstoffgehaltes wird erfindungsgemäss eine Rezirkulation eines Teils der Abgase in den Verdichteransaugstrom vorgeschlagen. Um die Eintrittstemperatur in den Verdichter durch Abgaserezirkulation nicht zu stark zu erhöhen, wird das rezirkulierte Abgas vor der Zumischung gekühlt. Beispielsweise ist die Gasturbinenanlage mit einem Kessel zur Ausnutzung der Abwärme gekoppelt. Die Abgase werden nach Austritt aus dem Kessel und vor der Rückführung in die Ansaugluft in einem Kühler weiter gekühlt.

Die vorgeschlagene Reduktion des Sauerstoffgehaltes führt zu einer Reduktion der Flammgeschwindigkeit sowie einer grösseren Zündverzögerung und damit einer grösseren Sicherheit gegen Flammrückschlag. Ausserdem ermöglicht sie eine bessere Vermischung von Brenngasen mit Verbrennungsluft. Dies führt zu reduzierten Spitzentemperaturen in der Flamme und damit zu einer Reduktion der NOx Emissionen. Je kleiner der Sauerstoffgehalt in der Verbrennungsluft ist, desto grösser ist der Effekt. Der Anteil an rezirkuliertem Abgas ist entsprechend so gross wie möglich zu wählen. Der Rezirkulationsanteil ist aber nach oben begrenzt, da der Sauerstoffgehalt nach der Zumischung in den Frischluftmassenstrom vor Verdichtereintritt ausreichen muss, um eine vollständige Verbrennung in der oder den Brennkammern der Gasturbinenanlage zu realisieren.

Ein weiterer Vorteil der Abgasrezirkulation bei mit wasserstoffreichen Brenngasen betriebenen Gasturbinenanlagen ist die Ausnutzung des bei der Verbrennung von Wasserstoff entstehenden Wassergehaltes zur Verdünnung der Verbrennungsluft. Ein grosser Teil des entstandenen, im Abgas enthaltenen Wasserdampfes wird damit den Verbrennungsgasen wieder zugeführt und wirkt dort sowohl verdünnend als auch als kinetisch reaktionsbremsend.

Erfindungsgemäß wird zur Verdünnung des Brenngases die Verwendung von Abgasen vorgeschlagen. Diese ist nur in Verbindung mit der oben beschriebenen Rezirkulation von Abgasen möglich, weil durch diese der Restsauerstoffgehalt des Abgases so weit reduziert werden kann, dass eine Rückzündung des Brenngas- Abgasgemisches ausgeschlossen wird. Die Verdünnung der Brenngase führt ebenfalls zu einer Reduktion der Flammgeschwindigkeit und damit einer grösseren Sicherheit gegen Flammrückschlag. Ausserdem ermöglicht auch sie eine bessere Vermischung von Brenngasen mit Verbrennungsluft. Dies führt zu reduzierten Spitzentemperaturen in der Flamme und damit zu einer weiteren Reduktion der NOx Emissionen. Zur Einspeisung in das Brenngas muss das rezirkulierte Abgas komprimiert werden. Zur Reduktion der Kompressionsarbeit wird das Abgas vor der Kompression gekühlt.

Weiter kann durch Zwischenkühlung während der Kompression die Kompressionsarbeit minimiert werden. Bei hohen Druckverhältnissen kann eine Zwischenkühlung oder Kühlung der komprimierten Abgase auch erforderlich werden, um bei der Brenngasverdünnung eine chemische Reaktion des Restsauerstoffes mit dem Brenngas zu verhindern. Die Zwischenkühlung kann beispielsweise durch Einspritzung von Wasser erfolgen. Dies hat weiterhin den Vorteil, das dem Brenngas kinetisch bremsend wirkendes Wasser direkt beigemischt wird.

Bei der Wassereinspritzung zur Zwischenkühlung, sowie bei allen weitern Ausführungen zur Wassereinspritzung vor oder in den Kompressor sowie in die Brenngase ist eine genügend feine Zerstäubung des Wassers sicher zu stellen, um eine schnelle Verdunstung der Wassertropfen zu gewährleisten und um Tropfenerosion oder Tropfenakkumulation zu vermeiden.

Abhängig von den Umgebungsbedingungen, den Betriebsbedingungen der Gasturbinenanlage, der Rückkühltemperatur und dem Anteil des rezirkulierten Massenstroms kann es bei der Rückkühlung zur Kondensation des im rezirkulierten Abgases enthaltenen Wasserdampfes kommen. Das Kondensat ist durch geeignete Verfahren abzuscheiden, um Erosionsschäden am Verdichter zu vermeiden. Das Kondensat kann nach Aufbereitung vor den Verdichter oder in den Verdichter zur Kühlung und/ oder Zwischenkühlung in die Ansaugluft und/oder in das zur Brennstoffverdünnung vorgesehene rezirkulierte Abgas zerstäubt eingespritzt werden. Die erforderliche Kondensataufbereitung ist abhängig von der Reinheit des Kondensates. Diese ist wiederum von dem verwendeten Brenngas, Filtrierung der Eintrittsluft und Umweltbedingungen abhängig. Im Idealfall sauberer Verdichteransaugluft und reiner Brenngase kann sie sich auf einen Sicherheitsfilter beschränken.

Das Verfahren der Rezirkulation ist so zu führen, dass der verbleibende Sauerstoffgehalt in den Abgasen minimiert wird. Der Anteil an rezirkuliertem Abgas ist aber so hoch zu wählen, dass der Sauerstoffgehalt nach Zumischung in den Frischluftmassenstrom vor Verdichtereintritt noch so hoch ist, wie er zu einer vollständigen Verbrennung in der oder den Brennkammern der Gasturbinenanlage nötig ist.

Beispielsweise kann der Restsauerstoff im Abgas auf etwa 3% reduziert werden. Der Restsauerstoff ist von den Betriebsparametern sowie der Bauart und Baugrösse der Gasturbine abhängig. Relevante Betriebsparameter sind beispielsweise die Verdichtereintrittstemperatur, die Heissgastemperatur und die Stellung der Verdichterleitschaufeln. Die verwendete Kühltechnologie und der damit verbundene, an der Brennkammer vorbeigeführte Anteil der Kühlluft bezogen auf die Gesamtluft ist ein Parameter mit entscheidendem Einfluss auf den Restsauerstoff.

Für eine Ausführung bei einer Gasturbinenanlage mit sequentieller Verbrennung liegt der Anteil des rezirkulierten Massenstroms beispielsweise bei etwa 55% des Ansaugmassenstromes. Dies ist ein typischer Wert bei Volllast. Je nach Betriebsparametern und Auslegung der Gasturbine kann er deutlich von diesem Wert abweichen. Er ergibt sich durch Rechnung aus der Forderung nach der Minimierung des Restsauerstoffes im Abgas.

Bei einer Ausführung wird ungeregelt ein praktisch konstanter Anteil des Abgasmassenstroms abgezweigt und rezirkuliert. Der Anteil an rezirkuliertem Abgasmassenstrom kann auf Volllast oder die in Bezug auf Flammrückschlag kritischsten Betriebsbedingungen oder einen anderen Betriebsparameter ausgelegt werden. Dies ist insbesondere bei Syngasen möglich deren Wasserstoffanteil nicht deutlich über 50% ist und die noch eine genügende Marge gegen Flammrückschlag bei nicht optimal reduziertem Sauerstoffgehalt haben. Diese einfache Art der Abgasteilung ist ausserdem möglich, wenn die Rezirkulation mit anderen, geregelten Massnahmen zur Verhinderung des Flammrückschlages kombiniert wird. Die Kombination mit weiteren Massnahmen kann beispielsweise dann nötig werden, wenn die Anlage unter von dem Auslegungspunkt abweichenden Bedingungen betrieben wird. Beispielsweise kann bei fester Abgasteilung und Rezirkulation eine Brenngasverdünnung mit extern zugeführtem Stickstoff oder Dampf vorgesehen werden, bei der die Brenngasverdünnung abhängig von dem in der Verdichtereintrittsluft, nach Zuführung des rezirkulierten Abgases, vorhandenen Restsauerstoffgehalt geregelt wird. Bei tiefer Teillast der Gasturbinenanlage, in der nur ein kleiner Teil des Sauerstoffes für die Verbrennung aufgebraucht wird und damit der Restsauerstoffgehalt steigt, ist hier eine starke Brenngasverdünnung mit extern zugeführtem Stickstoff oder Dampf vorzunehmen. Diese kann mit abnehmendem Restsauerstoff reduziert werden. Bei dieser Ausführung ist die Verdünnung der Brenngase mit rezirkuliertem Abgas, abhängig von der Brenngaszusammensetzung, den Betriebsparametern der Gasturbine, dem Brennerdesign und dem Restsauerstoff in den Abgasen, aufgrund der Gefahr einer Rückzündung in die Brenner und in das FDS (Fuel Distribution System) auf bestimmte Betriebsbedingungen einzuschränken oder gar nicht möglich.

Erfindungsgemäss wird der Anteil des rezirkulierten Abgasmassenstroms durch mindestens ein geeignetes Stellorgan geregelt. Sollwert der Regelung ist erfindungsgemäss der Restsauerstoffgehalt der Abgase. Leitend ist hierbei die sichere Verdünnung der Brenngase mit rezirkuliertem Abgas. Nach einer Unterausführung ist der Sauerstoffgehalt der Verbrennungsluft ein zusätzlicher Sollwert der Regelung. Leitend ist hierbei die in bezug auf Flammrückschlag robuste Verbrennung durch Rezirkulation. Die Kombination der Regelungen beider Grössen führt zu einer weitgehenden Redundanz und damit erhöhten Sicherheit. Ausserdem wird mit der Kombination gewährleistet, dass bei Betriebsbedingungen, die vom Auslegungsfall abweichen, beide Parameter in zulässigen Grenzen gehalten werden.

Die Regelung auf einen Sollwert des Restsauerstoffgehaltes führt einen Vergleich des "Ist-Wertes" des Restsauerstoffgehaltes mit dem Sollwert aus. Falls der Ist-Wert grösser als der Sollwert ist, wird der Rezirkulationsanteil erhöht. Falls der Ist-Wert kleiner als der Sollwert ist, wird der Rezirkulationsanteil reduziert.

In einer Ausführung wird der Sollwert des Restsauerstoffgehaltes im Abgas bzw. in der Verbrennungsluft konstant gewählt. Der Sollwert des Restsauerstoffs kann für den Volllastbetrieb oder die in bezug auf für Flammrückschlag kritischsten Betriebsbedingungen oder einen anderen Betriebsparameter ausgelegt werden.

In einer weiteren Ausführung wird der Sollwert des Sauerstoffgehaltes abhängig von der Brenngaszusammensetzung, den Betriebsparametern der Gasturbine und dem Brennerdesign geregelt. Beispielsweise kann der Sauerstoffgehalt bei Teillast, wenn die Verdichterendtemperatur und die Heissgastemperatur reduziert sind und damit die Flammrückschlaggefahr kleiner als bei Volllast ist, gegenüber dem Vollastwert erhöht werden. Dies erleichtert einen vollständigen Ausbrand und reduziert die CO Emissionen, die je nach Betriebsparametern und Brenngaszusammensetzung bei Teillast problematisch sein können.

In einer weiteren Ausführung wird der Sollwert des Sauerstoffgehaltes abhängig von der Brenngaszusammensetzung geregelt. Der Sauerstoffgehalt wird umgekehrt proportional zu dem Wasserstoffgehalt reduziert. Bei reinem Wasserstoff ist die Rückschlaggefahr am grössten, die Bildung von CO Emission ist aber ausgeschlossen, so dass der Sauerstoffgehalt minimiert werden kann. Mit zunehmendem Kohlenwasserstoffanteil im Brenngas geht in der Regel die Rückschlaggefahr zurück, so dass der Sauerstoffgehalt angehoben werden kann, um eine möglichst vollständige, CO und UHC (unburned hydrocarbon) freie Verbrennung zu gewährleisten.

Die als UHC freie Verbrennung bekannte Verbrennung, ist eine von unverbrannten Kohlenwasserstoffen freie Verbrennung.

Eine Ausführung ist die Anwendung des Verfahrens mit reinem Wasserstoff als Brenngas. In dieser Ausführung wird eine CO und UHC freie Verbrennung ohne CO2 Emission realisiert.

Die Abhängigkeit des benötigten Sauerstoffgehaltes von kritischen Betriebsparametern wie Verdichteraustrittstemperatur, Heissgastemperatur, Brenngaszusammensetzung usw. kann durch Gleichungen angenährt werden oder in Tabellenform im Regler gespeichert und interpoliert werden.

Die Kombination der erläuterten Effekte mit den bekannten Verfahren zur Verbrennung wasserstoffreicher Brenngase, wie Brenngasverdünnung mit extern zugeführtem Stickstoff oder Dampf, ist möglich. Kombinationen können insbesondere zum Anfahren erforderlich sein und bei transientem oder instationärem Betrieb der Gasturbinenanlage vorteilhaft sein.

Beim Anfahren der Gasturbineanlage wird zunächst der atmosphärische Luftsauerstoffgehalt in der Anlage, in den Abgaskanälen, in den Rezirkulationsleitungen und in einem typischerweise vorhanden Abhitzekessel vorhanden sein. Vor einer Reduktion des Sauerstoffgehaltes im Abgas durch Verbrennung und Rezirkulation führt die Rezirkulation nicht zu der erforderlichen Reduktion des Sauerstoffgehaltes in der Verbrennungsluft. Das Abgas ist ausserdem noch nicht zur Verdünnung von Brenngas geeignet. Bis der Abgassauerstoffgehalt abgesengt ist, muss eine robuste, flammrückschlagfreie Verbrennung durch andere Mittel sichergestellt sein. Dies können unter anderem die Verdünnung des Brenngases durch Stickstoff oder Dampf, Wassereinspritzung in Verdichter oder Brenner, Verwendung einer Diffusionsflame für den Start, oder die Verwendung eines Start-up Brennstoffes sein.

Bei transientem Betrieb kann sich der Sauerstoffverbrauch durch Verbrennung oder der Anteil, der an der Brennkammer vorbeigeführten Luft, schnell ändern. Beispielsweise wird bei einem Lastabwurf von Volllast der Verbrauch von Sauerstoff innerhalb kurzer Zeit (wenigen Sekunden) um einen Faktor zwei bis drei reduziert werden. Entsprechend wird der Restsauerstoffgehalt im Abgas ansteigen. Dieser Anstieg kann durch entsprechend schnelle Anpassung des Rezirkulationsanteils vermieden werden. Eine Regelung des Sauerstoffgehaltes kann hierfür sinnvoll durch eine Vorsteuerung der Rezirkulationsanteils ergänzt werden, die, je nach transientem Ereignis und je nach Betriebsparametern vor dem transienten Ereignis, das Rezirkulationsverhältnis anpasst, bevor die Regelung wieder übernimmt. Praktisch kann es einfacher sein, im Sinne einer robusten Verbrennung, die Abgasrezirkulation mit anderen Mitteln zu kombinieren. Diese können unter anderem die Verdünnung des Brenngases durch Stickstoff oder Dampf und Wassereinspritzung in Verdichter oder Brenner sein.

Bei normalem Lastbetrieb kann durch die Kombination mit anderen bekannten Mitteln die Robustheit der Verbrennung weiter gesteigert werden. Diese können unter anderem die Verdünnung des Brenngases durch Stickstoff oder Dampf und Wassereinspritzung in Verdichter oder Brenner sein.

Eine Kombination bietet sich auch dann an, wenn beispielsweise Dampf und/ oder Stickstoff zur Verdünnung der wasserstoffreichen Brenngase verfügbar sind, aber nicht ausreichen, um alleine einen sicheren Betrieb zu gewährleisten. Hier kann eine Reduktion des Sauerstoffgehaltes nach dem vorgeschlagenen Verfahren denn Verbrauch an herkömmlichen Mitteln zur sicheren Verbrennung von wasserstoffreichen Brenngasen reduzieren.

Neben dem Verfahren ist eine Gasturbinenanlage für wasserstoffreiche Brenngase zur Ausführung des erfindungsgemässen Verfahrens Gegenstand der Erfindung. Die Gasturbine weist eine Vorrichtung zur Rückführung von Abgasen in die Verdichtereintrittsluft auf.

Die erfindungsgemässe Gasturbinenanlage weist ferner eine Strömungsverzweigung im Abgaskanal, eine Abgasleitung von der Strömungsverzweigung zu dem Kamin und eine zweiten Abgasleitung von der Strömungsverzweigung zu dem Verdichtereinlass auf. Die Gasturbineanlage verfügt, wie alle weiteren Ausführungen, über eine Vorrichtung zur Kühlung des rezirkulierten Abgasstromes.

In einer weiteren Ausführung ist die Strömungsverzweigung eine verstellbare Klappe zur variablen Strömungsteilung.

In einer alternativen Ausführung ist die Strömungsverzweigung ein mechanisch fester Teiler gefolgt von einer verstellbaren Klappe oder einem Ventil in der Zuleitung zum Kamin und/ oder in der Rezirkulationsleitung. Bei dieser Ausführung ist nur ein Teilmassenstrom durch die Klappe oder das Ventil zu regeln, so dass ein Verstellorgan mit entsprechend kleinerer Baugrösse gewählt werden kann. Weiter kann bei der Ausführung mit Stellorgan in der Rezirkulationsleitung die Klappe oder das Ventil stromab des Rückkühlers ausgeführt sein, so dass die thermische Belastung kleiner bleibt.

Die Anlage verfügt ausserdem über mindestens einen Abgaskompressor, der einen Teil des rezirkulierten Abgases auf einen Druck komprimiert, der hoch genug ist, um ihn in das Brenngas einzuleiten, Abgasleitungen zu dem mindestens einem Brenngassystem, mindestens eine Vorrichtung zur Einleitung des Abgases in das Brenngas zur Brenngasverdünnung und mindestens ein Regelventil zur Regelung des Verdünnungsmassenstromes sowie ein Brenngasverteilsystem, dass das verdünnte Brenngas zu dem mindestens einen Brenner leitet.

In einer Ausführung verfügt die Anlage über einen Kondensatabscheider im Rückkühler oder stromab des Rückkühlers.

Eine weitere Ausführung verfügt über eine Kondensataufbereitungsanlage, Leitungen vom Kondensator zur Aufbereitungsanlage und weiter zum Verdichtereinlass und Pumpen zur Wassereinspritzung in den Ansaugmassenstrom.

Eine weitere Ausführung verfügt über eine Kondensataufbereitung, Leitungen vom Kondensator zur Aufbereitungsanlage und weiter zu dem Abgaskompressor, und Pumpen zur Einspritzung des Wassers in den Abgaskompressor zur Zwischenkühlung.

Je nach gewählten, im Verfahrensteil beschriebenen Regelverfahren, verfügt die Ausführung über mindestens ein Mittel den Restsauerstoff im Abgas, in der Verdichtereintrittsluft oder im Brennkammereintritt zu bestimmen. Dies kann ein Messinstrument zur direkten Sauerstoffmessung sein, eine Online Gasanalyse oder eine Vorrichtung zur indirekten Bestimmung sein. Ein Mittel zur indirekten Bestimmung ist beispielsweise ein Prozessor oder Regler, der aus Verdichteransaugmassenstrom, Abgasrezirkulationsanteil, Brenngaszusammensetzung und Brennstoffmengenmessung den Restsauerstoff berechnet. Der Ansaugmassenstrom kann dabei mit Hilfe der Verdichtercharakteristiken und der Umgebungsbedingungen (Ansaugtemperatur, Druck und Feuchte) oder über indirekte Messung ermittelt werden. Für die indirekte Messung des Ansaugmassenstromes sind ein charakteristischer Druckverlust sowie die ambienten Bedingungen zu bestimmen. Der Rezirkulationsanteil ergibt sich beispielsweise aus der Stellung und der Charakteristik der entsprechenden verstellbaren Klappe oder Stelleinrichtung.

Weitere Ausführungen sind Anlagen, die je nach gewählten, erfindungsgemässen Verfahren, über ein Gerät zur Online Analyse des Brenngases verfügen.

Weitere Vorteile und Ausgestaltungen der Erfindung sind in den Unteransprüchen beschrieben und ergeben sich aus der Beschreibung und den beiliegenden Zeichnungen. Alle erläuterten Vorteile sind nicht nur in den jeweils angegebenen Kombinationen, sondern auch in anderen Kombinationen oder Alleinstellung verwendbar, ohne den Rahmen der Erfindung zu verlassen.

### Kurze Beschreibung der Zeichnungen

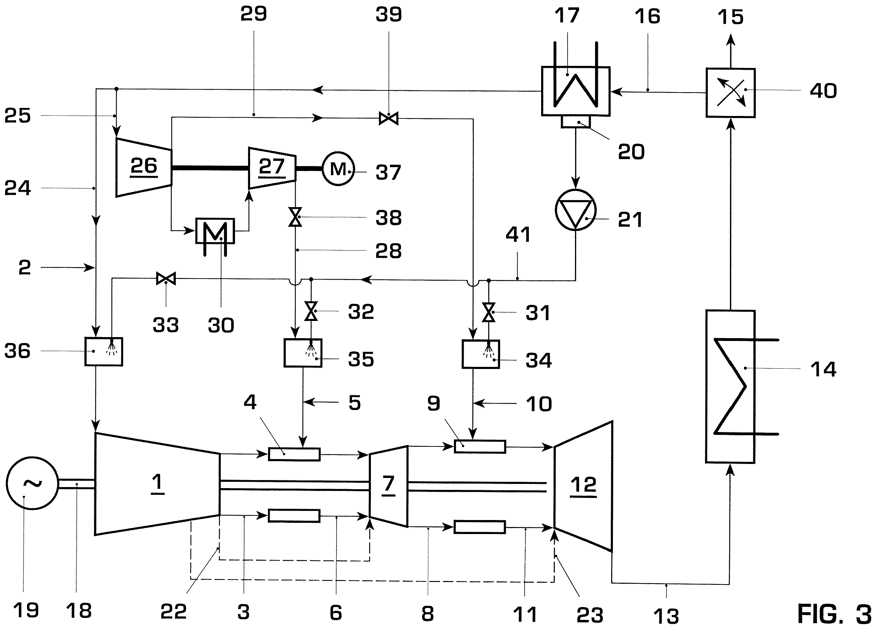

Die Erfindung ist anhand vom Ausführungsbeispiel in Fig. 3 schematisch dargestellt.
Es zeigen:
Fig. 1 die Abhängigkeit der Flammgeschwindigkeit einer Wasserstoffflamme (A) und einer Methanflamme (B) in Luft unter atmosphärischen Bedingungen vom stöchiometrischen Verhältnis
Fig. 2 eine nicht erfindungsgemässe Vorrichtung zur Durchführung des Verfahrens zur Abgasrezirkulation an dem Beispiel einer Gasturbinenanlage mit sequentieller Verbrennung,
Fig. 3 eine Vorrichtung zur Durchführung des Verfahrens zur Abgasrezirkulation an dem Beispiel einer Gasturbinenanlage mit sequentieller Verbrennung mit Verdünnung der Brenngase. Ausführung der Erfindung Eine Gasturbineanlage mit einer Vorrichtung zur Durchführung des erfindungsgemässen Verfahrens weist im wesentlichen mindestens einen Verdichter, zwei Brennkammern und mindestens eine Turbine auf, die über mindestens eine Welle den Verdichter und einen Generator antreibt.

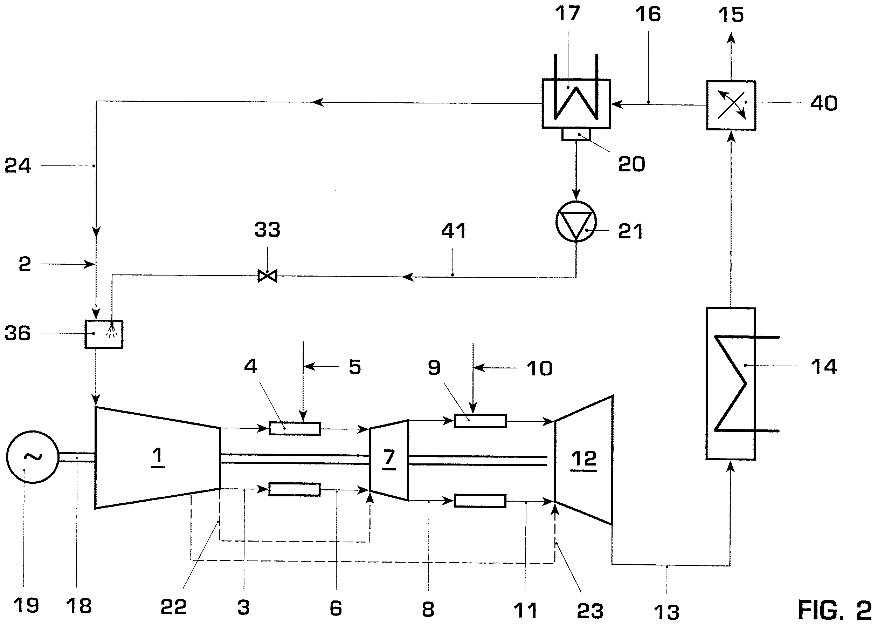

Fig. 2 zeigt eine nicht erfindungsgemässe Gasturbinenanlage mit sequentieller Verbrennung, die auf ebenfalls an sich bekannter Weise einen Verdichter 1, eine erste Brennkammer 4, eine erste Turbine 7, eine zweite Brennkammer 9, eine zweite Turbine 12, sowie einen Generator 19 umfasst. Die Turbinen 7 und 12 treiben über eine Welle 18 den Verdichter 1 und den Generator 19 Abgas 13 wird nach Austritt aus dem der Gasturbinenanlage nachgeschalteten Abhitzekessel 14 über einen Rückkühler 17 in die Ansaugluft 2 zurückgeführt, um damit die Sauerstoffkonzentration in der Verbrennungsluft zu reduzieren und somit eine robuste, flammrückschlagfreie Verbrennung zu realisieren.

Die Rückkühltemperatur hängt von den zur Verfügung stehenden Kühlmedien und Umgebungsbedingungen ab. Falls in ausreichender Menge verfügbar, ist die Verwendung von Kühlwasser zur Rückkühlung vorteilhaft. Eine andere Ausführungsform ist die Rückkühlung über Luft- Luft Kühlung mit der Umgebungsluft. In diesem Fall wird die Temperatur der rezirkulierten Luft beispielsweise auf etwa 10 K über der ambienten Aussentemperatur gekühlt. Falls Kühlwasser, z.B. aus einem Fluss verfügbar ist, kann die rezirkulierte Luft weiter gekühlt werden. Die Rückkühlung kann je nach Betriebsbedingungen beispielsweise auch durch Einspritzung von Wasser erfolgen oder durch eine Kombination von Wärmetauscher und Wassereinspritzung realisiert werden. Dies hat weiterhin den Vorteil, das kinetisch bremsend wirkendes Wasser in die Verbrennungsluft beigemischt wird.

Je nach ambienten Bedingungen, den Betriebsbedingungen der Gasturbinenanlage, der Rückkühltemperatur und dem Anteil des rezirkulierten Massenstroms wird dabei ein Teil des, in dem rezirkulierten Abgas enthaltenen, Wasserdampfes kondensiert. Das Kondensat 41 wird in einem Tropfen oder Kondensatabscheider 20 aus dem rezirkulierten Abgas entfernt, um Tropfenerosion im Verdichter (1, 26 und 27) zu verhindern. Das Kondensat kann nutzbringend zur Zwischenkühlung und Reduktion der Kompressionsarbeit in die Ansaugluft (36) wieder eingespritzt werden. Zur Einspritzung wird es durch eine Pumpe 21 unter Druck gesetzt.

Da der Rezirkulationsanteil geregelt wird, um z.B. den Sauerstoffgehalt im Abgas oder in der Verbrennungsluft zu regeln, ist eine verstellbare Vorrichtung 40 zur Abgasteilung vorzusehen. Dies kann beispielsweise eine verstellbare Klappe sein. Eine andere Möglichkeit zur Einstellung des Rezirkulationsanteils ist die Kombination eines mechanisch festen Strömungsteilers mit nachgeschalteten Stellorganen, wie zum Beispiel einer Klappe oder einem Ventil, in der Rezirkulationsleitung und/ oder der Abgasleitung.

Fig. 3 zeigt eine erfindungsgemässe Gasturbinenanlage mit sequentieller Verbrennung, in der die unter Fig.2 erläuterte Abgasrezirkulation realisiert wird. Ausserdem wird in dieser Ausführung ein Teil des Abgases zur Brenngasverdünnung genutzt.

Das zur Brenngasverdünnung vorgesehene Abgas 25 muss zunächst in einem Abgaskompressor 26 komprimiert werden. Das zu Brenngasverdünnung in der ersten Brennkammer 4 vorgesehene Abgas 28 muss weiter über einen Hochdruckkompressor 27 verdichtet werden. Die Kompressoren 26 und 27 sind von mindestens einem Motor 37 angetrieben. Vor dem Hochdruckkompressor 27 kann ein Zwischenkühler 30 zur Reduktion der Kompressionsarbeit vorgesehen sein. Weiter können Rückkühler nach der Kompression zur Reduktion der Abgastemperatur bei der Brenngasverdünnung vorgesehen sein (hier nicht dargestellt). Zur Regelung des Verdünnungsverhältnisses sind für die Einspeisung in das Brenngas Regelventile 38 und 39 vorgesehen. Mit diesen wird in Abhängigkeit der Brenngasmengen 5 und 10 für die erste und zweite Brennkammer 4 und 9 und dem benötigten Verdünnungsverhältnis die Verdünnungsmassenströme 28 und 29 eingestellt.

Das Kondensat kann in dieser Ausführung nutzbringend zur Zwischenkühlung und Reduktion der Kompressionsarbeit in die Ansaugluft (2) über eine Einspritzvorrichtung (36) und/ oder in die zur Brennstoffverdünnung vorgesehene rezirkulierte Luft (28, 29) über Einspritzvorrichtungen (34, 35) wieder eingespritzt werden. Zur Einspritzung wird es durch eine Pumpe 21 unter Druck gesetzt. Die Regelung der Kondensatmassenströme zur Einspritzung wird über die Kondensatregelventile 31, 32 und 33 vorgenommen.

Bei einer einfachen Ausführung wird durch einen Strömungsteiler ungeregelt ein Teil des Abgasmassenstroms abgezweigt und rezirkuliert 16 und der Restabgasstrom 15 dem Kamin zugeführt.

## Patentansprüche

1. Verfahren zum Betrieb einer Gasturbinenanlage mit wasserstoffreichem Brenngas, die Gasturbinenanlage umfassend:
wenigstens eine Strömungsverzweigung (40) in einem Abgaskanal;
eine erste Abgasleitung (15) von der Strömungsverzweigung (40) zu einem Kamin;
eine zweite Abgasleitung von der Strömungsverzweigung über einen Rückkühler (17) zu einem Verdichtereinlass zur Rezirkulation von Abgasen (16, 24),
wobei die wenigstens eine Strömungsverzweigung (40) ein Stellorgan ist zur Regelung der Anteile der Abgasmassenströme in der ersten Abgasleitung (15) und der zweiten Abgasleitung, wobei als Sollwert der Regelung der Restsauerstoffgehalt des Abgases (13) verwendet wird;
eine dritte Abgasleitung von der zweiten Abgasleitung stromab des Rückkühlers (17) und stromauf des Verdichters (1) zu mindestens einem Abgaskompressor (26, 27), der einen Teil (25) der rezirkulierten Abgase (16) auf einen Druck komprimiert, der hoch genug ist, um ihn in das wasserstoffreiche Brenngas (5, 10) zur Brenngasverdünnung mittels einer Vorrichtung einzuleiten;
eine erste Brennkammer (4) und eine zweite Brennkammer (9),
**dadurch gekennzeichnet, dass** die Gasturbinenanlage weiter umfasst:
eine vierte Abgasleitung (29) von dem Abgaskompressor (26) zur zweiten Brennkammer (9);
eine fünfte Abgasleitung (28) von dem Abgaskompressor (26) zuerst zu einem Zwischenkühler (30), danach zu einem Hochdruckabgaskompressor (27), und zuletzt zur ersten Brennkammer (4);
ein Regelventil (39) in der vierten Abgasleitung (29) und ein Regelventil (38) in der fünften Abgasleitung (28) zur Regelung des jeweiligen Verdünnungsmassenstromes in Abhängigkeit einer ersten Brenngasmenge (5) für die erste Brennkammer (4) und einer zweiten Brenngasmenge (10) für die zweite Brennkammer (9);
und ein Brenngasverteilsystem, welches die verdünnten Brenngase zur jeweiligen Brennkammer (4, 9) leitet,
wobei der im Stellorgan (40) geregelte und abgezweigte Anteil der rezirkulierten Abgase (16) in dem Rückkühler (17) gekühlt wird, der erste Teil (24) des im Rückkühler (17) gekühlten Abgases (16) in eine Ansaugluft (2) des Verdichters (1) rezirkuliert wird, und der zweite Teil (25) des im Rückkühler (17) gekühlten Abgases (16) im Abgaskompressor (26) komprimiert wird,
und wobei das zur Brenngasverdünnung in der zweiten Brennkammer (9) bestimmte Abgas (29) mit der zweiten Brenngasmenge (10) vermischt wird und das zur Brenngasverdünnung in der ersten Brennkammer (4) bestimmte Abgas (28) weiter über den Hochdruckabgaskompressor (27) mit Zwischenkühlung (30) komprimiert und mit der ersten Brenngasmenge (5) vermischt wird.

2. Verfahren nach Anspruch 1, **dadurch gekennzeichnet, dass** als zusätzlicher Sollwert der Regelung der Sauerstoffgehalt der Verbrennungsluft verwendet wird.

3. Verfahren nach Anspruch 1 oder 2, **dadurch gekennzeichnet, dass** die Abgase zur Ausnutzung ihrer Abwärme durch einen Kessel (14) geführt werden und die Abgase nach Austritt aus dem Kessel (14) in die zwei Teilströme (15, 16) geteilt werden.

4. Verfahren nach einem der Ansprüche 1 bis 3, **dadurch gekennzeichnet, dass** bei der Rückkühlung (17) der rezirkulierten Abgase (16) auftretendes Kondensat (41) in einem Kondensatabscheider (20) abgeschieden wird.

5. Verfahren nach Anspruch 4, **dadurch gekennzeichnet, dass** das abgeschiedene Kondensat (41) aufbereitet wird und zur Kühlung und/oder Zwischenkühlung in die Ansaugluft (2) und/oder in das zur Brennstoffverdünnung vorgesehene rezirkulierte Abgas (28, 29) der vierten und fünften Abgasleitung zerstäubt eingespritzt (34, 35, 36) wird.

6. Verfahren nach einem der Ansprüche 1 bis 5, **dadurch gekennzeichnet, dass**
- der Sollwert der Regelung des Restsauerstoffgehaltes im Abgas oder in der Verbrennungsluft konstant gewählt wird oder
- der Sollwert des Sauerstoffgehaltes abhängig von der Brenngaszusammensetzung ist und der Sollwert des Restsauerstoffgehalts umgekehrt proportional zu dem Wasserstoffgehalt im Brenngas ist und/oder
- der Sollwert des Sauerstoffgehaltes abhängig von den Betriebsparametern der Gasturbinenanlage, ist.

7. Verfahren nach einem der Ansprüche 1 bis 6, **dadurch gekennzeichnet, dass** als Brenngas reiner Wasserstoff verwendet wird und damit eine CO und UHC (unburned hydrocarbon) freie Verbrennung ohne CO₂ Emission realisiert wird.

8. Eine Gasturbinenanlage zur Durchführung des Verfahrens nach Anspruch 1 mit Verbrennung von wasserstoffreichem Brenngas umfassend:
wenigstens eine Strömungsverzweigung (40) in einem Abgaskanal;
eine erste Abgasleitung (15) von der Strömungsverzweigung (40) zu einem Kamin;
eine zweite Abgasleitung von der Strömungsverzweigung über einen Rückkühler (17) zu einem Verdichtereinlass zur Rezirkulation von Abgasen (16, 24) in die Ansaugluft (2), wobei die wenigstens eine Strömungsverzweigung (40) ein Stellorgan ist zur Regelung der Anteile der Abgasmassenströme in der ersten Abgasleitung (15) und der zweiten Abgasleitung, wobei als Sollwert der Regelung der Restsauerstoffgehalt des Abgases (13) verwendet wird;
eine dritte Abgasleitung von der zweiten Abgasleitung stromab des Rückkühlers (17) und stromauf des Verdichters (1) zu mindestens einem Abgaskompressor (26, 27), der einen Teil (25) der rezirkulierten Abgase (16) auf einen Druck komprimiert, der hoch genug ist, um ihn in das wasserstoffreiche Brenngas (5, 10) zur Brenngasverdünnung mittels einer Vorrichtung einzuleiten;
eine erste Brennkammer (4) und eine zweite Brennkammer (9),
**dadurch gekennzeichnet, dass** die Gasturbinenanlage weiter umfasst:
eine vierte Abgasleitung (29) von dem Abgaskompressor (26) zur zweiten Brennkammer (9); eine fünfte Abgasleitung (28) von dem Abgaskompressor (26) zuerst zu einem Zwischenkühler (30), danach zu einem Hochdruckabgaskompressor (27), und zuletzt zur ersten Brennkammer (4);
ein Regelventil (39) in der vierten Abgasleitung (29) und ein Regelventil (38) in der fünften Abgasleitung (28) zur Regelung des jeweiligen Verdünnungsmassenstromes in Abhängigkeit einer ersten Brenngasmenge (5) für die erste Brennkammer (4) und einer zweiten Brenngasmenge (10) für die zweite Brennkammer (9); und
ein Brenngasverteilsystem, welches die verdünnten Brenngase zur jeweiligen Brennkammer (4, 9) leitet.

9. Eine Gasturbinenanlage nach Anspruch 8, **dadurch gekennzeichnet,**
- **dass** die Strömungsverzweigung (40) eine verstellbare Klappe zur variablen Strömungsteilung ist oder
- **dass** die Strömungsverzweigung (40) ein mechanisch fester Teiler gefolgt von einer verstellbaren Klappe oder einem Ventil in der ersten Abgasleitung (15) zum Kamin und/oder in der zweiten Abgasleitung (16) ist.

10. Eine Gasturbinenanlage nach einem der Ansprüche 8 oder 9, **dadurch gekennzeichnet, dass** sie über einen Kondensatabscheider (20) im Rückkühler (17) oder stromab des Rückkühlers verfügt und über eine Kondensataufbereitungsanlage, Leitungen zum Verdichtereinlass und Pumpen (21) zur Wassereinspritzung (36) in den Ansaugmassenstrom der Ansaugluft (2) verfügt.

11. Eine Gasturbinenanlage nach einem der Ansprüche 8 bis 10, **dadurch gekennzeichnet, dass** sie über eine Kondensataufbereitung, Leitungen zu den Abgaskompressoren (26, 27) und mindestens eine Pumpe (21) zur Einspritzung des Wassers in die Abgaskompressoren (26, 27) zur Zwischenkühlung verfügt.

12. Eine Gasturbinenanlage nach einem der Ansprüche 8 bis 11, **dadurch gekennzeichnet, dass** sie
- über ein Messinstrument zur direkten Sauerstoffgehaltmessung verfügt und/oder
- über eine Online Gasanalyse verfügt und/oder
- über eine Vorrichtung zur indirekten Bestimmung des Sauerstoffgehalts, wie einem Prozessor oder einem Regler, der aus Verdichteransaugmassenstrom, Abgasrezirkulationsanteil, Brenngaszusammensetzung und Brennstoffmengenmessung den Restsauerstoff berechnet, verfügt und/oder
- über ein Gerät zur Online Analyse des Brenngases verfügt.

## Claims

1. Method for operation of a gas turbine system with hydrogen-rich fuel gas, wherein the gas turbine system comprises
- at least one flow branch point (40) in an exhaust gas channel;
- a first exhaust gas line (15) from the flow branch point (40) to a flue stack;
- a second exhaust gas line from the flow branch point via a back-cooler (17) to a compressor inlet for recirculation of exhaust gases (16, 24),
wherein the at least one flow branch point (40) is an actuator element for controlling the proportions of the exhaust gas mass flows in the first exhaust gas line (15) and the second exhaust gas line, wherein the setpoint of the control loop is the residual oxygen content of the exhaust gas (13);
- a third exhaust gas line from the second exhaust gas line downstream of the back-cooler (17) and upstream of the compressor (1) to at least one exhaust gas compressor (26, 27) which compresses a part (25) of the recirculated exhaust gases (16) to a pressure which is sufficiently high to introduce it into the hydrogen-rich fuel gas (5, 10) for fuel gas dilution by means of a device;
- a first combustion chamber (4) and a second combustion chamber (9); **characterised in that** the gas turbine system furthermore comprises:
- a fourth exhaust gas line (29) from the exhaust gas compressor (26) to the second combustion chamber (9);
- a fifth exhaust gas line (28) from the exhaust gas compressor (26) firstly to an inter-cooler (30) and thereafter to a high-pressure exhaust gas compressor (27), and finally to the first combustion chamber (4);
- a control valve (39) in the fourth exhaust gas line (29) and a control valve (38) in the fifth exhaust gas line (28) to control the respective dilution mass flow depending on a first fuel gas quantity (5) for the first combustion chamber (4) and a second fuel gas quantity (10) for the second combustion chamber (9);
- and a fuel gas distribution system which conducts the diluted fuel gases to the respective combustion chamber (4, 9);
wherein the branched part of the recirculated exhaust gases (16) controlled in the actuating element (40) is cooled in the back-cooler (17), the first part (24) of the exhaust gas (16) cooled in the back-cooler (17) is recirculated into an intake air (2) of the compressor (1), and the second part (25) of the exhaust gas (16) cooled in the back-cooler (17) is compressed in the exhaust gas compressor (26),
and wherein the exhaust gas (29) intended for fuel gas dilution in the second combustion chamber (9) is mixed with the second fuel gas quantity (10), and the exhaust gas (28) intended for fuel gas dilution in the first combustion chamber (4) is further compressed via the high-pressure exhaust gas compressor (27) with intermediate cooling (30) and mixed with the first fuel gas quantity (5).

2. Method according to claim 1, **characterised in that** the oxygen content of the combustion air is used as an additional setpoint for the control system.

3. Method according to claim 1 or 2, **characterised in that** the exhaust gases are conducted through a boiler (14) for utilising their waste heat, and after emerging from the boiler (14), the exhaust gases are divided into the two part flows (15, 16).

4. Method according to any of claims 1 to 3, **characterised in that** the condensate (41) occurring on back-cooling (17) of the recirculated exhaust gases (16) is separated in a condensate separator (40).

5. Method according to claim 4, **characterised in that** the separated condensate (41) is treated and, for cooling and/or intermediate cooling, is injected (34, 35, 36) in atomised form into the intake air (2) and/or into the recirculated exhaust gas (28, 29) intended for fuel dilution of the fourth and fifth exhaust gas line.

6. Method according to any of claims 1 to 5, **characterised in that**
- the setpoint of the control loop of the residual oxygen content in the exhaust gas or in the combustion air is selected to be constant, or
- the setpoint of the oxygen content is dependent on the fuel gas composition, and the setpoint of the residual oxygen content is inversely proportional to the hydrogen content in the fuel gas, and/or
- the setpoint of the oxygen content is dependent on the operating parameters of the gas turbine system.

7. Method according to any of claims 1 to 6, **characterised in that** pure hydrogen is used as fuel gas, thereby achieving combustion which is free from CO and UHC (unburned hydrocarbons) with no CO₂ emission.

8. Gas turbine system for performance of the method according to claim 1 with combustion of hydrogen-rich fuel gas, comprising
- at least one flow branch point (40) in an exhaust gas channel;
- a first exhaust gas line (15) from the flow branch point (40) to a flue stack;
- a second exhaust gas line from the flow branch point via a back-cooler (17) to a compressor inlet for recirculation of exhaust gases (16, 24) into the intake air (2);
- wherein the at least one flow branch point (40) is an actuator element for controlling the proportions of the exhaust gas mass flows in the first exhaust gas line (15) and the second exhaust gas line, wherein the setpoint of the control loop is the residual oxygen content of the exhaust gas (13);
- a third exhaust gas line from the second exhaust gas line downstream of the back-cooler (17) and upstream of the compressor (1) to at least one exhaust gas compressor (26, 27) which compresses a part (25) of the recirculated exhaust gases (16) to a pressure which is sufficiently high to introduce it into the hydrogen-rich fuel gas (5, 10) for fuel gas dilution by means of a device;
- a first combustion chamber (4) and a second combustion chamber (9); **characterised in that** the gas turbine system furthermore comprises:
- a fourth exhaust gas line (29) from the exhaust gas compressor (26) to the second combustion chamber (9); a fifth exhaust gas line (28) from the exhaust gas compressor (26) firstly to an inter-cooler (30) and thereafter to a high-pressure exhaust gas compressor (27), and finally to the first combustion chamber (4);
- a control valve (39) in the fourth exhaust gas line (29) and a control valve (38) in the fifth exhaust gas line (28) to control the respective dilution mass flow depending on a first fuel gas quantity (5) for the first combustion chamber (4) and a second fuel gas quantity (10) for the second combustion chamber (9); and
- a fuel gas distribution system which conducts the diluted fuel gases to the respective combustion chambers (4, 9).

9. Gas turbine system according to claim 8, **characterised in that**
- the flow branch point (40) is an adjustable flap for variable flow division, or
- the flow branch point (40) is a mechanically fixed divider followed by an adjustable flap or a valve in the first exhaust gas line (15) to the flue stack and/or in the second exhaust gas line (16).

10. Gas turbine system according to one of claims 8 or 9, **characterised in that** it has a condensate separator (20) in the back-cooler (17) or downstream of the back-cooler, and a condensate treatment plant, lines to the compressor inlet, and pumps (21) for water injection (36) into the intake mass flow of the intake air (2).

11. Gas turbine system according to any of claims 8 to 10, **characterised in that** it has a condensate treatment plant, lines to the exhaust gas compressors (26, 27) and at least one pump (21) for injecting water into the exhaust gas compressors (26, 27) for intermediate cooling.

12. Gas turbine system according to any of claims 8 to 11, **characterised in that** it has
- a measuring instrument for direct measurement of oxygen content, and/or
- an online gas analysis, and/or
- a device for indirectly determining the oxygen content, such as a processor or a regulator which calculates the residual oxygen from the compressor intake mass flow, the exhaust gas recirculation proportion, the fuel gas composition and the fuel quantity measurement, and/or
- a device for online analysis of the fuel gas.

## Revendications

1. Procédé destiné à faire fonctionner une installation de turbine à gaz avec des gaz combustibles riches en hydrogène, l'installation de turbine à gaz comprenant :
au moins une ramification d'écoulement (40) dans un canal de gaz d'échappement ;
une première conduite de gaz d'échappement (15) à partir de la ramification d'écoulement (40) vers une cheminée ;
une deuxième conduite de gaz d'échappement à partir de la ramification d'écoulement vers une entrée de condenseur en passant par un réfrigérant de retour (17), pour la recirculation des gaz d'échappement (16, 24),
la ramification d'écoulement (40) au moins au nombre de un étant un organe de réglage destiné à la régulation des fractions des flux massiques de gaz d'échappement dans la première conduite de gaz d'échappement (15) et dans la deuxième conduite de gaz d'échappement, la teneur résiduelle en oxygène des gaz d'échappement (13) étant utilisée en tant que valeur de consigne de la régulation ;
une troisième conduite de gaz d'échappement à partir de la deuxième conduite de gaz d'échappement en aval du réfrigérant de retour (17) et en amont du condenseur (1) vers au moins un compresseur des gaz d'échappement (26, 27) qui comprime une partie (25) des gaz d'échappement (16) recyclés à une pression qui est suffisamment élevée pour introduire cette partie dans les gaz combustibles (5, 10) riches en hydrogène à des fins de dilution des gaz combustibles au moyen d'un dispositif ;
une première chambre de combustion (4) et une deuxième chambre de combustion (9), **caractérisé en ce que** l'installation de turbine à gaz comprend également :
une quatrième conduite de gaz d'échappement (29) à partir du compresseur de gaz d'échappement (26) vers la deuxième chambre de combustion (9) ;
une cinquième conduite de gaz d'échappement (28) à partir du compresseur de gaz d'échappement (26) d'abord vers un refroidisseur intermédiaire (30), puis vers un compresseur de gaz d'échappement haute pression (27) et enfin vers la première chambre de combustion (4) ;
une vanne de régulation (39) dans la quatrième conduite de gaz d'échappement (29) et une vanne de régulation (38) dans la cinquième conduite de gaz d'échappement (28) pour la régulation du flux massique de dilution respectif en fonction d'une première quantité de gaz combustibles (5) pour la première chambre de combustion (4) et d'une deuxième quantité de gaz combustibles (10) pour la deuxième chambre de combustion (9) ;
et un système de répartition de gaz combustibles qui conduit les gaz combustibles dilués vers la chambre de combustion (4, 9) respective,
la fraction des gaz d'échappement (16) recyclés réglée dans l'organe de réglage (40) et ramifiée est refroidie dans le réfrigérant de retour (17), la première partie (24) des gaz d'échappement (16) refroidis dans le réfrigérant de retour (17) étant recyclée en air d'aspiration (2) du condenseur (1), et la deuxième partie (25) du gaz d'échappement (16) refroidi dans le réfrigérant de retour (17) étant comprimée dans le compresseur de gaz d'échappement (26),
et les gaz d'échappement (29) destinés à la dilution des gaz combustibles dans la deuxième chambre de combustion (9) étant mélangés avec la deuxième quantité de gaz combustibles (10), et les gaz d'échappement (28) destinés à la dilution des gaz combustibles dans la première chambre de combustion (4) étant soumis à une compression complémentaire par le biais du compresseur de gaz d'échappement haute pression (27) avec refroidissement intermédiaire (30) et étant mélangés avec la première quantité de gaz combustibles (5).

2. Procédé selon la revendication 1, **caractérisé en ce que** la teneur en oxygène de l'air de combustion est utilisée en tant que valeur de consigne supplémentaire de la régulation.

3. Procédé selon la revendication 1 ou 2, **caractérisé en ce que** les gaz d'échappement sont guidés à travers une chaudière (14) pour l'exploitation de leur chaleur, et les gaz d'échappement sont divisés en deux flux partiels (15, 16) après la sortie hors de la chaudière (14).

4. Procédé selon l'une des revendications 1 à 3, **caractérisé en ce que** lors du refroidissement de retour (17) des gaz d'échappement (16) recyclés, le condensat (41) qui se forme est séparé dans un séparateur de condensat (20).

5. Procédé selon la revendication 4, **caractérisé en ce que** le condensat (41) séparé est traité et est injecté (34, 35, 36) dans l'air d'aspiration (2) sous forme pulvérisée pour le refroidissement et/ou pour le refroidissement intermédiaire et/ou dans les gaz d'échappement (28, 29) de la quatrième et de la cinquième conduite de gaz d'échappement recyclés prévus pour la dilution des gaz combustibles.

6. Procédé selon l'une des revendications 1 à 5, **caractérisé en ce que**
- la valeur de consigne de la régulation de la teneur résiduelle en oxygène dans les gaz d'échappement ou dans l'air de combustion est choisie constante ou
- la valeur de consigne de la teneur en oxygène est fonction de la composition des gaz combustibles, et la valeur de consigne de la teneur résiduelle en oxygène est inversement proportionnelle à la teneur en hydrogène dans les gaz combustibles et/ou
- la valeur de consigne de la teneur en oxygène est fonction des paramètres de fonctionnement de l'installation de turbine à gaz.

7. Procédé selon l'une des revendications 1 à 6, **caractérisé en ce que** de l'oxygène pur est utilisé en tant que gaz combustibles et de cette façon une combustion exempte de CO et d'UHC (unburned hydrocarbon) sans émission de CO₂ est réalisée.

8. Installation de turbine à gaz destinée à la réalisation du procédé selon la revendication 1 avec combustion de gaz combustibles riches en hydrogène, comprenant :
au moins une ramification d'écoulement (40) dans un canal des gaz d'échappement ;
une première conduite de gaz d'échappement (15) à partir de la ramification d'écoulement (40) vers une cheminée ;
une deuxième conduite de gaz d'échappement à partir de la ramification d'écoulement vers une entrée de condenseur pour la recirculation des gaz d'échappement (16, 24) dans l'air d'aspiration (2), en passant par un réfrigérant de retour (17),
la ramification d'écoulement (40) au moins au nombre de un étant un organe de réglage destiné à la régulation des fractions des flux massiques de gaz d'échappement dans la première conduite de gaz d'échappement (15) et dans la deuxième conduite de gaz d'échappement, la teneur résiduelle en oxygène des gaz d'échappement (13) étant utilisée en tant que valeur de consigne de la régulation ;
une troisième conduite de gaz d'échappement à partir de la deuxième conduite de gaz d'échappement en aval du réfrigérant de retour (17) et en amont du condenseur (1) vers au moins un compresseur des gaz d'échappement (26, 27) qui comprime une partie (25) des gaz d'échappement (16) recyclés à une pression qui est suffisamment élevée pour introduire cette partie dans les gaz combustibles (5, 10) riches en hydrogène à des fins de dilution des gaz combustibles au moyen d'un dispositif ;
une première chambre de combustion (4) et une deuxième chambre de combustion (9), **caractérisée en ce que** l'installation de turbine à gaz comprend également :
une quatrième conduite de gaz d'échappement (29) à partir du compresseur de gaz d'échappement (26) vers la deuxième chambre de combustion (9) ; une cinquième conduite de gaz d'échappement (28) à partir du compresseur de gaz d'échappement (26) d'abord vers un refroidisseur intermédiaire (30), puis vers un compresseur de gaz d'échappement haute pression (27) et enfin vers la première chambre de combustion (4) ;
une vanne de régulation (39) dans la quatrième conduite de gaz d'échappement (29) et une vanne de régulation (38) dans la cinquième conduite de gaz d'échappement (28) pour la régulation du flux massique de dilution respectif en fonction d'une première quantité de gaz combustibles (5) pour la première chambre de combustion (4) et d'une deuxième quantité de gaz combustibles (10) pour la deuxième chambre de combustion (9) ; et
un système de répartition de gaz combustibles qui conduit les gaz combustibles dilués vers la chambre de combustion (4, 9) respective.

9. Installation de turbine à gaz selon la revendication 8, **caractérisée en ce que** :
- la ramification d'écoulement (40) est un clapet réglable destiné à la division variable de l'écoulement ou
- la ramification d'écoulement (40) est un diviseur mécaniquement fixe suivi d'un clapet réglable ou d'une vanne dans la première conduite de gaz d'échappement (15) conduisant à la cheminée et/ou dans la deuxième conduite de gaz d'échappement (16).

10. Installation de turbine à gaz selon l'une des revendications 8 ou 9, **caractérisée en ce qu'**elle dispose d'un séparateur de condensat (20) dans le réfrigérant de retour (17) ou en aval du réfrigérant de retour, et dispose d'une installation de traitement du condensat, de conduites vers l'entrée de condenseur et de pompes (21) pour l'injection d'eau (36) dans le flux massique d'aspiration de l'air d'aspiration (2).

11. Installation de turbine à gaz selon l'une des revendications 8 à 10, **caractérisée en ce qu'**elle dispose d'un traitement du condensat, de conduites vers les compresseurs de gaz d'échappement (26, 27) et d'au moins une pompe (21) pour l'injection d'eau dans les compresseurs de gaz d'échappement (26, 27) pour le refroidissement intermédiaire.

12. Installation de turbine à gaz selon l'une des revendications 8 à 11, **caractérisée en ce qu'**elle
- dispose d'un instrument de mesure pour la mesure directe de la teneur en oxygène et/ou
- dispose d'une analyse des gaz en ligne et/ou
- dispose d'un dispositif pour la détermination indirecte de la teneur en oxygène, comme un processeur ou un régulateur, qui calcule l'oxygène résiduel à partir du flux massique d'aspiration de condenseur, de la fraction de recyclage des gaz d'échappement, de la composition des gaz combustibles et de la mesure de la quantité de combustibles et/ou
- dispose d'un appareil pour l'analyse en ligne des gaz combustibles.
